(19) Europäisches Patentamt
European Patent Office
Office européen des brevets

(11) Veröffentlichungsnummer : **0 247 469 B1**

# (12) EUROPÄISCHE PATENTSCHRIFT

(45) Veröffentlichungstag der Patentschrift : **19.07.89**

(51) Int. Cl.[4] : **B 29 D 30/56**

(21) Anmeldenummer : **87107140.3**

(22) Anmeldetag : **18.05.87**

## (54) Vulkanisationshülle zum Reparieren und Runderneuern von Fahrzeugreifen.

(30) Priorität : **30.05.86 DE 3618251**

(43) Veröffentlichungstag der Anmeldung : **02.12.87 Patentblatt 87/49**

(45) Bekanntmachung des Hinweises auf die Patenterteilung : **19.07.89 Patentblatt 89/29**

(84) Benannte Vertragsstaaten : **AT BE CH DE ES FR GB GR IT LI LU NL SE**

(56) Entgegenhaltungen :
**DE-A- 3 420 125**
**US-A- 3 236 709**
**US-A- 3 884 740**
**US-A- 4 175 991**
**US-A- 4 309 234**

(73) Patentinhaber : **Schmermbeck, Dieter**
**Suitbertweg 2B**
**D-4630 Bochum-Harpen (DE)**

**Schmermbeck, Christine**
**Suitbertweg 2B**
**D-4630 Bochum-Harpen (DE)**

(72) Erfinder : **Schmermbeck, Dieter**
**Suitbertweg 2B**
**D-4630 Bochum-Harpen (DE)**
Erfinder : **Schmermbeck, Christine**
**Suitbertweg 2B**
**D-4630 Bochum-Harpen (DE)**

(74) Vertreter : **Finkener und Ernesti Patentanwälte**
**Heinrich-König-Strasse 119**
**D-4630 Bochum 1 (DE)**

**EP 0 247 469 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung richtet sich auf eine Vulkanisationshülle oder -abdeckung zum Einsatz bei Reparaturen oder beim Runderneuern von Fahrzeugreifen, wobei die Hülle bzw. Abdeckung zumindest den Bearbeitungsbereich des Reifens luftdicht abdeckt und für das Abführen von Luft-Gaseinschlüssen aus dem Raum zwischen Hülle und Reifen bzw. Laufstreifen oder Laufstreifensegment vorgesehen ist und wobei die Hülle bzw. Abdeckung während des Vulkanisiervorganges in einem Autoklaven den Bearbeitungsbereich abdeckt.

Runderneuerungsverfahren unter Zuhilfenahme von Vulkanisationshüllen der eingangs bezeichneten Art sind bekannt, so z. B. aus DE-PS 25 03 973 oder DE-AS 27 22 134.

Bei der bekannten Verfahrensweise wird die zu erneuernde Lauffläche eines Reifens abgetragen, die neue Lauffläche in der Regel in Form von Bandabschnitten, Segmenten oder Stollen oder auch als Ring auf den aufgerauhten Reifen aufgeschoben, wobei eine Bindeplatte zwischengelegt wird. Anschließend wird der Reifen von einer Hülle ggf. als Kopfhülle oder Vollform umschlossen, die aus Gummi besteht und insbesondere dazu dient, die Lufteinschlüsse vor dem Vulkanisieren aus dem Reifen, den Profilen u. dgl. abzuziehen sowie die Austrittsstellen des Bindegummis zu verschliessen. Dabei kann zwischen Hülle und Reifen ein Nylongitter o. dgl. eingelegt sein, um als Wegenetzhalter für das Entfernen der Luft dienen zu können. Ein so vorbereiteter Reifen wird dann in einen heizbaren Druckkessel eingebracht, um den Laufstreifen an die Karkasse anvulkanisieren zu können.

Die bekannte Verfahrensweise hat bereits eine Fülle von Vorteilen. Ein wesentlicher Nachteil besteht allerdings darin, daß die eingesetzten Hüllen eine sehr geringe Lebensdauer aufweisen. Es kann vorkommen, daß die Hüllen an den Reifen bzw. die Reifenflanken anvulkanisieren, sie müssen dann abgeschnitten werden, der Verbindungsbereich muß mechanisch nachbearbeitet werden u. dgl. mehr. Da die Hüllen laufend dem Autoklaven unterworfen werden, unterliegen sie einem sehr schnellen Alterungsprozeß, so daß sie nach ca. 30-maligem Benutzen unbrauchbar sind. Auch ist die Herstellung der Hüllen vergleichsweise aufwendig, selbst wenn sie aus Autoschläuchen hergestellt worden sind, da die Verbindung der einzelnen Teilstücke zur Bildung einer Hülle durch Zusammenvulkanisieren erfolgen muß. Dies gilt auch für das Einbringen von Ventilen. Es müssen sogenannte Schließkanten, d. h. Dichtungslippen aufvulkanisiert werden, die Verbindung muß unter Zuhilfenahme von Heizpressen, Formen, Lösungen u. dgl. erfolgen.

Aufgabe der Erfindung ist die Schaffung einer Lösung, mit der unter Beibehaltung der Vorteile des sogenannten Kaltverfahrens beim Vulkanisieren die Standzeit der Hüllen erheblich verlängert wird, die Handhabung vereinfacht und insbesondere das Aufvulkanisieren von Laufstreifen als Teilstück ansonsten endloser Bandabschnitte vereinfacht wird.

Bei einer Vulkanisationshülle der eingangs bezeichneten Art wird diese Aufgabe gemäß der Erfindung dadurch gelöst, daß eine Vulkanisationshülle bzw. -abdeckung aus einer Kunststoffolie aus thermoplastisch-gummielastischem Polyurethan besteht, und daß im Falle einer teilweisen Abdeckung des Reifens ggf. ein zusätzlicher Dichtring vorgesehen ist.

Mit der erfindungsgemäßen Vulkanisationshülle werden eine Fülle von Vorteilen erreicht, die insbesondere darin liegen, daß die eingesetzte Hülle praktisch beliebig oft benutzbar ist. Sie unterliegt nicht den den Gummihüllen eigenen Alterungsbedingungen, sie ist einfach zu verarbeiten, leicht herzustellen, einfach mit Ventilen zu versehen u. dgl. mehr.

Die Hülle macht es auch möglich, einen Dichtring vorzusehen, der z. B. nicht selbst aus Gummi bestehen muß, um eine dichtende Verbindung zwischen Reifen und Hülle zu ermöglichen. Hier reicht ein mit einer Klebeschicht ausgerüsteter Dichtring vollständig aus.

Es gibt Einsatzfälle, in denen es eines Dichtringes an sich gar nicht bedarf. Hier hat die Erfindung den ganz erheblichen Vorteil, daß z. B. der äußere Rand der Hülle durch Wärmeeinwirkung verflüssigt werden kann und dann am Reifen haftet, ohne daß zusätzliche Dichtmittel erforderlich sind. Diese besondere Ausgestaltung nach der Erfindung wird erst durch das Hüllenmaterial möglich.

Die Erfindung sieht daher in weiterer Ausgestaltung vor, daß die Vulkanisationshülle mit einem zur Abdichtung verflüssigbaren Randbereich und/oder in der Gebrauchslage mit einem Dichtring mit einer Klebebeschichtung versehen ist.

Die Klebebeschichtung kann von einem üblichen Klebstoff bereitgestellt werden. Sie kann aber auch aus Gummi- oder Gummilösung bestehen.

Vorteilhaft kann es sein, wenn der Dichtring bereichsweise aus vollvulkanisiertem Gummi und/oder Polyurethan-Kunststoff besteht, damit ein Haften dieses Dichtringes am Reifen und/oder an der Hülle vermieden wird. Kommt es zum Anhaften von Teilen, so beschränkt sich dies ausschließlich auf die Klebebeschichtung, die so gering ist, daß dies später beim runderneuerten Reifen keine Rolle mehr spielt.

Die Erfindung sieht auch vor, daß die Hülle aus miteinander verschweißten und/oder verklebten Ringzuschnitten aus Kunststoff gebildet ist. Waren beim Stand der Technik, d. h. bei Gummihüllen, aufwendige Herstellungsverfahren nötig, um diese Hüllen zu erzeugen, so ist dies bei der Erfindung nicht mehr der Fall. Hier können die Polyurethan-Kunststoffbahnen o. dgl. direkt miteinander, z. B. mittels Heißluft, verschweißt werden. Auch stehen Klebstoffe zur Verfügung, mit denen die Bahnen aneinander geklebt werden können.

Die Erfindung sieht auch vor, daß die Vulkanisationshülle an wenigstens einer Stelle mit einem Ventil aus einem thermoplastischen Kunststoff oder aus Gummi versehen ist. Das Ventil kann dabei mit der Hülle verklebt sein. Es kann aber auch eine mechanische Verbindung, z. B. durch eine Verschraubung vorgesehen sein. Dies wird durch die Erfindung möglich gemacht. Eine derartige Verbindung war beim Stand der Technik nicht möglich.

Die Erfindung sieht auch vor, daß die Vulkanisationshülle mit Dichtlippen aus thermoplastischem Polyurethan versehen ist, wobei mit diesem Werkstoff die oben erwähnten Vorteile verbunden sind.

Vollformen und Kopfhüllen aus Gummi sind bekannt. In Anlehnung hieran sieht die Erfindung auch vor, daß die Vulkanisationshülle aus dem beanspruchten Material ebenfalls als Folienvollform ausgebildet sein kann.

Es gibt Einsatzfälle, in denen die Reifenseitenflanken beschädigt sind und in einem gewissen Maße nachgearbeitet werden sollen. Auch können Profile, Aufschriften o. dgl. mehr dort zusätzlich vorgesehen werden. Für diesen Einsatzzweck sieht die Erfindung vor, daß die Vulkanisationshülle auf ihrer den Reifenseitenflanken zugewandten Seite Seitenschalen aus thermoplastisch-gummielastischen Polyurethanfolien wenigstens teilweise mit umschließt. Diese Seitenschalen können eine größere Wandstärke aufweisen als die Vulkanisationshülle selbst, um z. B. eine etwas höhere Wandsteifigkeit zu erreichen.

Die Erfindung sieht auch vor, daß Teile der Hülle bereichsweise verstärkt ausgebildet sind. Zweckmäßig ist dabei insbesondere der Bereich an der Wulst des Reifens, der von der Vulkanisationshülle umgeben ist, verstärkt, um die hier auftretenden Belastungen leichter abfangen zu können. Dabei kann z. B. die Hülle auch teilweise aus gespritztem Material bestehen bzw. die Kopfhülle in einem entsprechenden Extruder in einem Stück gespritzt werden.

Als Hüllenmaterial kommt im wesentlichen ein thermoplastisches Polyurethan in Frage, etwa ein solches, wie es unter der Bezeichnung « Platilon » oder « Desmopan » bekannt ist.

Das erstere stellt ein Polyadditionsprodukt von Di- und Polyisocyanat dar in Verbindung mit reaktiven Wasserstoffatomen, etwa nach dem allgemeinen Schema :

$$R \cdot NCO + R \cdot OH \rightarrow R{-}NH{-}CO{-}O{-}R,$$

während die « Desmopan-Kunststoffe » durch die nachfolgend wiedergegebene Formel definiert werden können :

OCH—(C—R—NH—C—O—Gl—O—C—NH—)m
Ö Ö

(—R—NH—C—O—Polykette—O—C—$NH_n$—)—NCO
Ö Ö

Als Klebstoffe zum Verkleben von Hüllenteilen aneinander oder auch z. B. zum Aufkleben von Ventilen haben sich Kleber auf der Basis von Polyurethan als sinnvoll erwiesen. Aber auch Kleber unter der Handelsbezeichnung 2578 ebenso wie Kleber mittels Harz und Härter oder Epoxyd-Harze, Polyesterkleber sowie Desmokol-Typen mit Härtern auf Desmodur-Basis.

Wie bereits weiter oben angegeben wurde, können auch Verbindungen der Teile miteinander durch Hitze vorgenommen werden. So bieten sich hier beispielsweise das bereits erwähnte Heißluftklebeverfahren an oder auch das Stickstoffschweißen oder eine chemische Verschweißung.

Natürlich können auch Heizelement- und Wärmeimpulsschweissungen vorgenommen werden, ebenso wie Frequenzschweißen, Ultraschallschweißen, Heizsiegeln, Heizsiegelschweißen oder Reibungsschweißen.

Die Erfindung ist anhand der Zeichnung beispielsweise näher erläutert. Diese zeigt in

Fig. 1-4 schematische Schnittzeichnungen durch einen Reifen mit Vulkanisationshülle und unterschiedlichen Randabdichtsystemen,

Fig. 5-9 unterschiedliche Querschnittsformen eines Dichtringes sowie in

Fig. 10-14 weitere Ausführungsbeispiele in der Darstellungsweise gemäß Fig. 1.

Auf die mit 1 bezeichnete Karkasse ist eine Bindeplatte 2 aufgelegt, auf die wiederum ein Laufstreifen 3 aufgebracht ist. Überdeckt werden diese Elemente von einer mit einer Mittelnaht und wenigstens einem Ventil 5 versehenen Kopfhülle 6. Diese Kopfhülle besteht aus einer Polyurethan-Kunststoffolie. Ein möglicher Stoß an den Enden des Laufstreifens 3 wird von der Vulkanisationshülle 6 überdeckt und gehalten.

An den Flanken ist jeweils ein Dichtring 7 vorgesehen, wobei der linke in Fig. 1 von einer Hohlnadel 8 zum Absaugen von Luft durchstochen ist. Die Zusammensetzung des Dichtringes nach Fig. 1 soll dabei die folgende sein :

| | |
|---|---|
| NR — | 100,00 |
| Renacit — | 0,10 |
| Aktiplasti — | 4,50 |
| Aflux-R — | 1,00 |

| | |
|---|---|
| Bayer-Titan — | 10,00 |
| Koresin — | 3,00 |
| Ultrasil-VN3 — | 62,00 |
| Öl-Ingraplast S — | 14,00 |
| Napht, | |

diese Mischung wird nachfolgend Komponente 1 als unvulkanisiertes bzw. unvulkanisierbares Gummi bezeichnet und ist daher beliebig oft einsetzbar nach einer entsprechenden Aufbereitung.

In Fig. 2 ist dargestellt, daß der Dichtring 7 außen jeweils mit einem schmalen Streifen unvulkanisiertem Gummi nach der Komponente 1 beschichtet ist. Dieser Bereich ist in Fig. 2 mit je 7a bezeichnet, während der Innenbereich aus PU-Kunststoff oder vollvulkanisiertem Gummi bestehen soll, dies ist mit 7b bezeichnet. Die Fig. 3 und 4 zeigen eine andere Art des Auflegens des Dichtringes. Hier wird der Dichtring auf den Trennfugenbereich zwischen Seitenflanke des Reifens und Wandkante der Kopfhülle 6 von außen aufgelegt.

Die Fig. 5-9 zeigen unterschiedliche Querschnittsformen von Dichtringen mit Beschichtungen, die in vorangegangenen Figuren bereits bezeichnet wurden. In Fig. 10 ist die Möglichkeit dargestellt, mit einer Bindegummimischung zu arbeiten und den Übergangsbereich mit einem unvulkanisierten Dichtring abzuschließen. Dabei ist die Bindegummiaustrittsstelle mit 9 bezeichnet.

Fig. 11 zeigt eine sogenannte Folienvollform, d. h. die Karkasse 1 ist vollständig von einer Vulkanisationshülle als Folienvollform 6a umgeben. Auch diese Folienvollform weist ein Absaugventil 5 auf, hier ist noch ein sogenanntes Wegenetz 10 dargestellt, mit dem erreicht werden soll, daß beim Absaugen der Luft aus der Vulkanisationshülle, die in dem Laufprofil eingeschlossene Luft mit abgesaugt werden kann.

Fig. 12 zeigt ebenfalls eine Folienvollform, allerdings besteht diese aus zwei Teilen, nämlich dem Kopfhüllenteil 6b und dem Innenhüllenteil 6c, die über Dichtringe 7c gegeneinander abgedichtet sind. Die Dichtringe bzw. Dichtlippen 7c sind aus Kunststoff und sind entweder am Innenhüllenteil aufgeklebt oder verschweißt. Die verschweißte oder verklebte Naht des Kopfhüllenteiles 6b ist weiderum mit 4 bezeichnet.

Eine andere Gestaltung einer einteiligen Folienvollform 6d zeigt die Fig. 13. Hier ist das Kopfhüllenteil und das Innenhüllenteil einstückig ausgeführt und über einen Dichtbereich 7d miteinander verbunden.

Z. B. in dem Bereich der Wulst, der in Fig. 13 mit 11 bezeichnet ist, kann die Folie verstärkt ausgebildet sein, was allerdings nicht näher dargestellt ist. Natürlich können auch andere Bereiche verstärkt ausgebildet sein. Die Verstärkung kann zugleich als Ansatzpunkt für benachbarte Teile dienen, wenn die Hülle aus mehreren Teilen zusammengesetzt wird.

Die Fig. 14 zeigt schließlich eine von sehr vielen unterschiedlichen Ausführungsformen, bei denen mit einer Kopfhülle 6e gearbeitet wird, die über eine Felge 12 an der Karkasse 1 befestigt bzw. abgedichtet ist, wobei hier die Felge 12 über ein eigenes Ventil 5a verfügt, um das Innere der Karkasse 1 unter Druck setzen zu können da andernfalls der Reifen durch den Druck im Autoklav deformiert würde.

Bei einer Vollform ist der von der Hülle ganz umschlossene Reifen innen und außen vom Medium umgeben, also in jedem Bereich herrscht ein gleicher Druck.

Es sei bemerkt, daß die Folienstärke zwischen 0,05 und 5 mm betragen kann, je nach Einsatz und Verwendungszweck können auch sehr dünne Kopfhüllen erzeugbar sein, die als Wegwerfhüllen dienen, d. h., die nur ein einziges Mal eingesetzt werden. Auch kann der Übergangsbereich zwischen Kopfhülle und Seitenflanke des Reifens durch Erhitzen des Wandbereiches der Kopfhülle vorgenommen werden; diese legt sich dann selbstklebend an der Reifenflanke an. Handelt es sich um eine Folienvollform, kann ein entsprechender Überlappungsbereich durch Erhitzen abgedichtet werden.

## Patentansprüche

1. Vulkanisationshülle oder -abdeckung zum Einsatz bei Repaturen oder beim Runderneuern von Fahrzeugreifen, wobei die Hülle bzw. Abdeckung zumindest den Bearbeitungsbereich des Reifens luftdicht abdeckt und für das Abführen von Luft-Gaseinschlüssen aus dem Raum zwischen Hülle und Reifen bzw. Laufstreifen oder Laufstreifensegment vorgesehen ist und wobei die Hülle bzw. Abdeckung während des Vulkanisiervorganges in einem Autoklaven den Bearbeitungsbereich abdeckt, dadurch gekennzeichnet, daß die Vulkanisationshülle bzw. -abdeckung aus einer Kunststoffolie (6) aus thermoplastisch-gummielastischem Polyurethan besteht, und daß im Falle einer teilweisen Abdeckung des Reifens ggf. ein zusätzlicher Dichtring (7) vorgesehen ist.

2. Vulkanisationshülle nach Anspruch 1, dadurch gekennzeichnet, daß sie zur Abdichtung mit verflüssigbaren Randbereichen und in der Gebrauchslage mit einem Dichtring (7) mit einer Klebebeschichtung versehen ist.

3. Vulkanisationshülle nach Anspruch 2, dadurch gekennzeichnet, daß der Dichtring (7) bereichsweise aus vollvulkanisiertem Gummi (7b) und/oder Polyurethan-Kunststoff besteht.

4. Vulkanisationshülle nach einem der vorangehenden Ansprüche, dadurch gekennzeichnet, daß die Hülle (6) aus miteinander verschweißten und/oder verklebten Ringzuschnitten aus Kunststoff gebildet ist.

5. Vulkanisationshülle nach einem der vorangehenden Ansprüche, dadurch gekennzeichnet, daß sie

an wenigstens einer Stelle mit einem Ventil (5) aus thermoplastischem Kunststoff oder aus Gummi versehen ist.

6. Vulkanisationshülle nach einem der vorangehenden Ansprüche, dadurch gekennzeichnet, daß sie mit Dichtlippen aus thermoplastischem Polyurethan versehen ist.

7. Vulkanisationshülle nach einem der vorangehenden Ansprüche, dadurch gekennzeichnet, daß sie als Folienvollform (6a, 6d) oder Kopfhülle (6e) ausgebildet ist.

8. Vulkanisationshülle nach einem der vorangehenden Ansprüche, dadurch gekennzeichnet, daß auf ihrer den Reifenseitenflanken zugewandten Seite Seitenschalen größerer Wandstärke aus thermoplastisch-gummielastischen Polyurethanfolien vorgesehen sind, die von der Hülle (6) wenigstens bereichsweise überdeckt sind.

9. Vulkanisationshülle nach einem der vorangehenden Ansprüche, dadurch gekennzeichnet, daß diese bereichsweise (11) verstärkt ausgebildet ist.

## Claims

1. Vulcanization envelope or cover for use during repairs or in full wrap retreads of vehicle tires, wherein the envelope or cover encloses at least the working region of the tire in an airtight manner and is provided for the evacuation of air or gas inclusions from the space between the envelope and the tire or the tread strip or the tread strip segments and wherein the envelope or cover covers the working region during the vulcanization process in an autoclave, characterized in that the vulcanization envelope or cover consists of plastics material foil (6) from thermoplastic, rubber elastic polyurethane, and that in case of a partial covering of the tire a sealing ring (7) is possibly provided.

2. Vulcanization envelope according to claim 1, characterized in that it is provided with liquefiable edge regions for sealing purposes and in the functional state with a sealing ring (7) coated with adhesive or binder.

3. Vulcanization envelope according to claim 2, characterized in that the sealing ring (7) consists in some of its regions of fully vulcanized rubber (7b) and/or polyurethane-plastics materials.

4. Vulcanization envelope according to one of the preceding claims, characterized in that the envelope (6) is formed of circular plastics material blanks which are welded and/or bonded with each other.

5. Vulcanization envelope according to one of the preceding claims, characterized in that it is equipped at least at one point with a valve (5) from thermoplastic plastics material or from rubber.

6. Vulcanization envelope according to one of the preceding claims, characterized in that it is equipped with sealing lips from thermoplastic polyurethane.

7. Vulcanization envelope according to one of the preceding claims, characterized in that it is designed as a full wrap foil shape (6a, 6d) or as tread envelope (6e).

8. Vulcanization envelope according to one of the preceding claims, characterized in that side shells of greater wall thickness from plastic or rubber elastic polyurethane foils are provided on its side facing the tire sidewalls, which side shells are at least partially covered by the envelope (6).

9. Vulcanization envelope according to one of the preceding claims, characterized in that it is designed to be reinforced in certain regions (11).

## Revendications

1. Enveloppe ou couverture de vulcanisation destinée à être utilisée pour des réparations ou le rechapage de pneus pour véhicules, l'enveloppe ou la couverture couvrant au moins, de manière étanche, la zone à traiter du pneu, et permettant l'évacuation d'inclusions d'air ou de gaz de l'espace entre enveloppe et pneu ou bande de roulement ou secteur de bande ; de plus, l'enveloppe ou la couverture couvre la zone à traiter pendant la vulcanisation dans l'autoclave, étant caractérisée par le fait que l'enveloppe ou couverture de vulcanisation est composée d'une feuille plastique (6) en polyuréthane thermoplastique à élasticité de gomme et qu'en cas d'une couverture partielle du pneu une bague d'étanchéité supplémentaire (7) sera prévue.

2. Enveloppe de vulcanisation décrite au point 1, caractérisée par le fait qu'elle comporte des bords liquéfiables aux fins d'étanchéisation et qu'elle est équipée, en position d'usage, d'une bague d'étanchéité (7) à revêtement collant.

3. Enveloppe de vulcanisation décrite au point 2, caractérisée par le fait que la bague d'étanchéité (7) comporte des zones fabriquées de gomme entièrement vulcanisée (7b) et/ou de polyuréthane.

4. Enveloppe de vulcanisation décrite sous un des points précédents, caractérisée par le fait que l'enveloppe (6) est composée de tronçons annulaires plastiques raccordés par soudure et/ou par collage.

5. Enveloppe de vulcanisation décrite sous un des points précédents, caractérisée par le fait qu'elle comporte au moins une soupape (5) d'une matière thermoplastique ou de gomme.

6. Enveloppe de vulcanisation décrite sous un des points précédents, caractérisée par le fait qu'elle comporte des lèvres d'étanchéité de polyuréthane thermoplastique.

7. Enveloppe de vulcanisation décrite sous un des points précédents, caractérisée par le fait qu'elle a la forme d'un moule de feuille entier (6a, 6d) ou d'une enveloppe de tête (6e).

8. Enveloppe de vulcanisation décrite sous un des points précédents, caractérisée par le fait qu'elle comporte, des côtés tournés vers les flancs du pneu, des coques latérales à épaisseur de parois plus élevée, en feuilles de polyuréthane thermoplastiques à élasticité de gomme et qui sont au moins en partie recouvertes par l'enveloppe (6).

9. Enveloppe de vulcanisation décrite sous un des points précédents, caractérisée par le fait qu'elle comporte des zones renforcées (11).

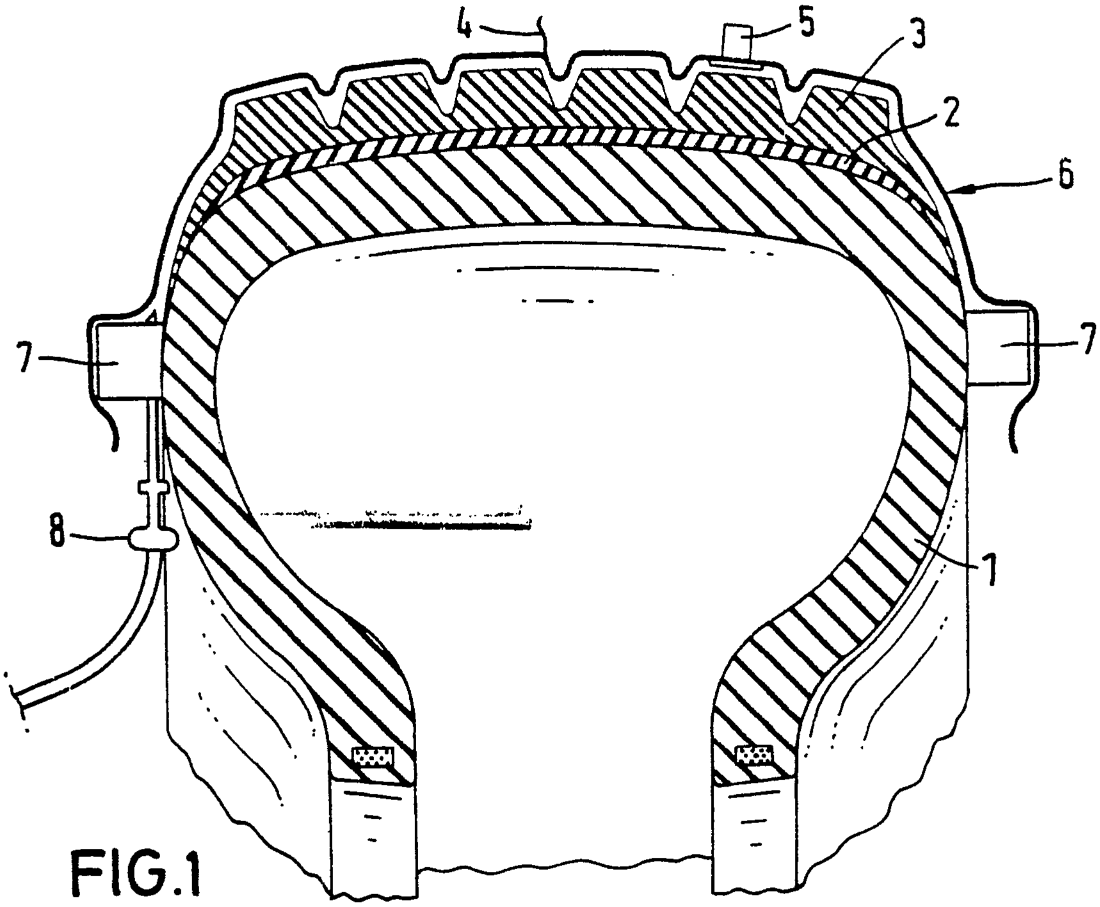


FIG.1

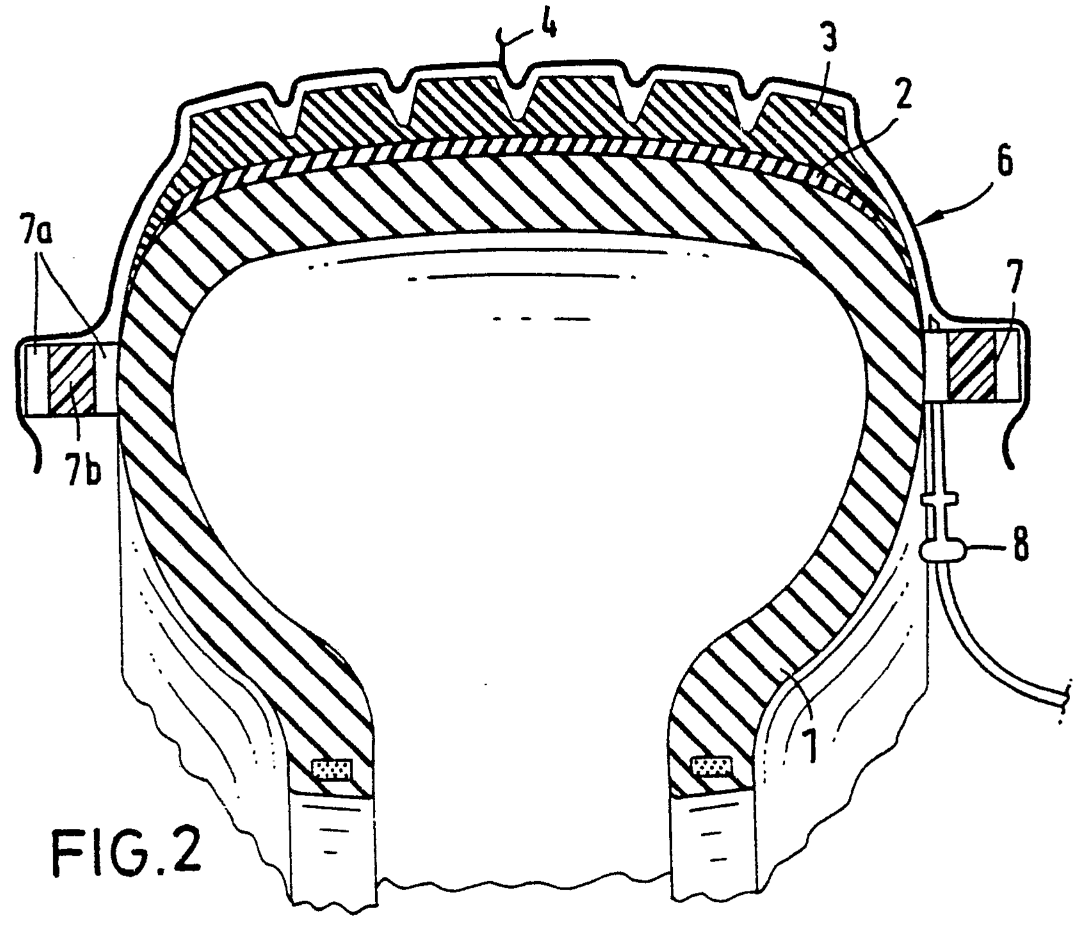


FIG.2

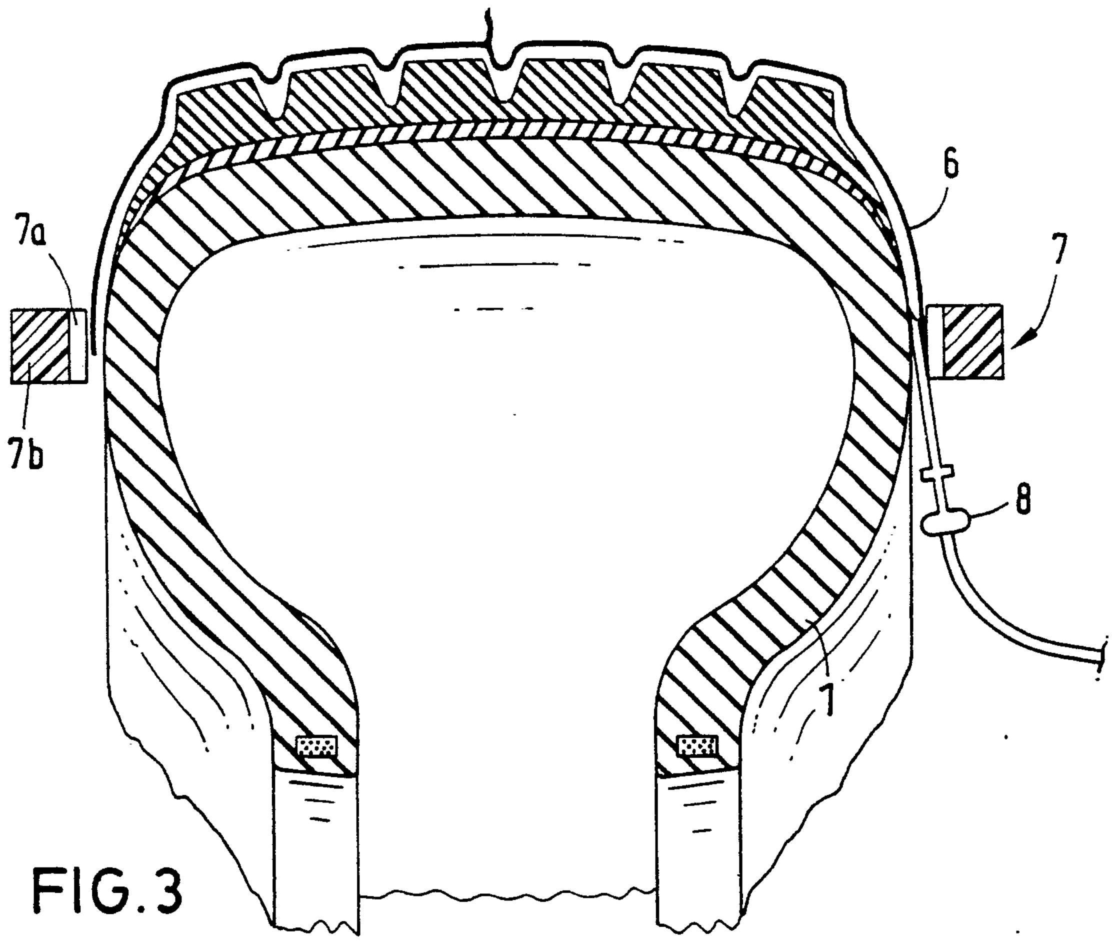


FIG.3

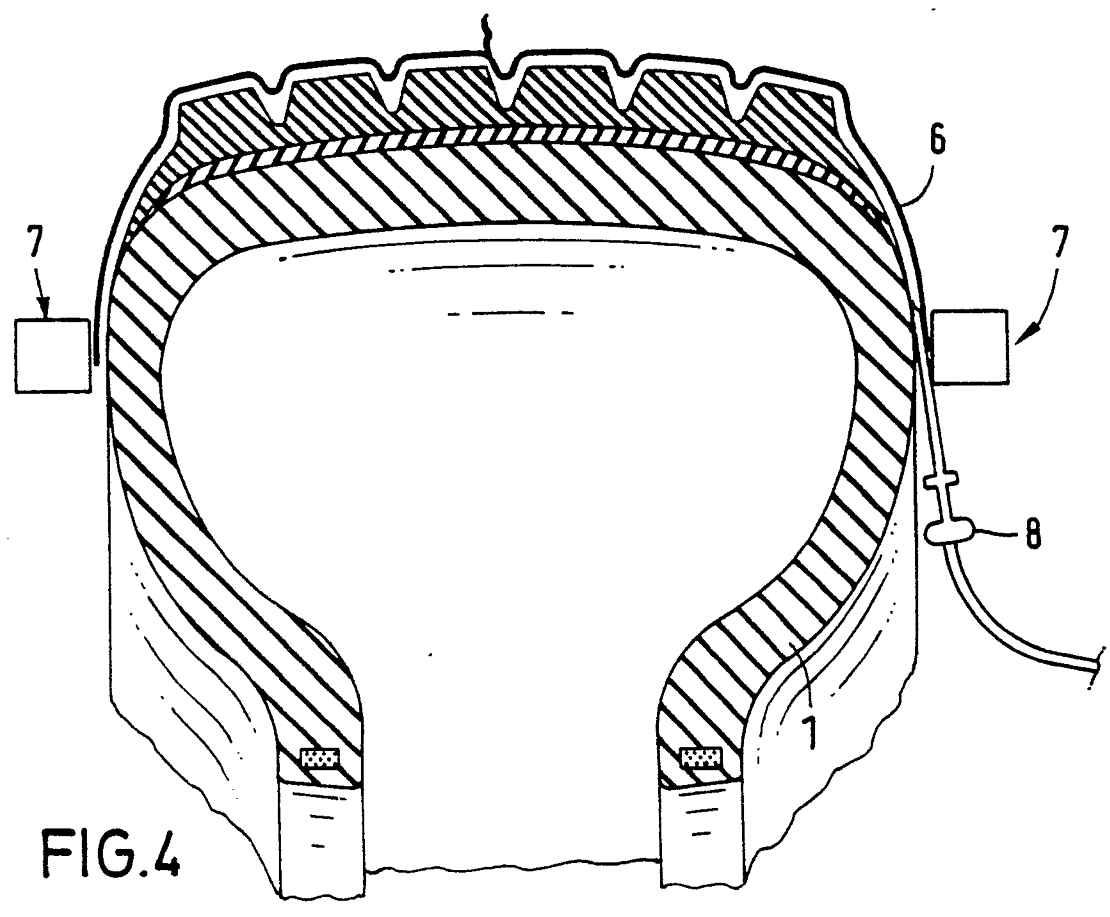


FIG.4

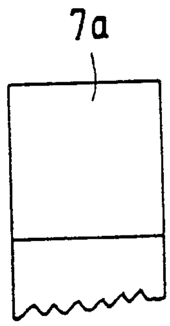


FIG.5

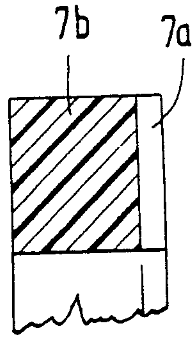


FIG.6

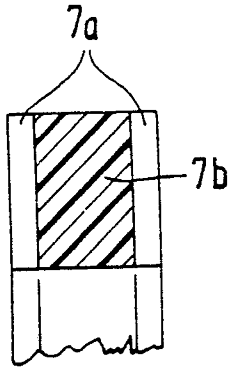


FIG.7

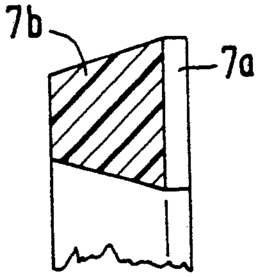


FIG.8

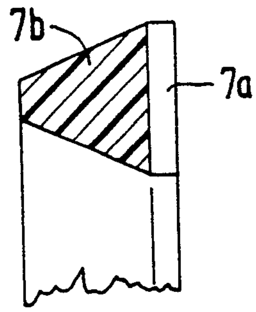


FIG.9

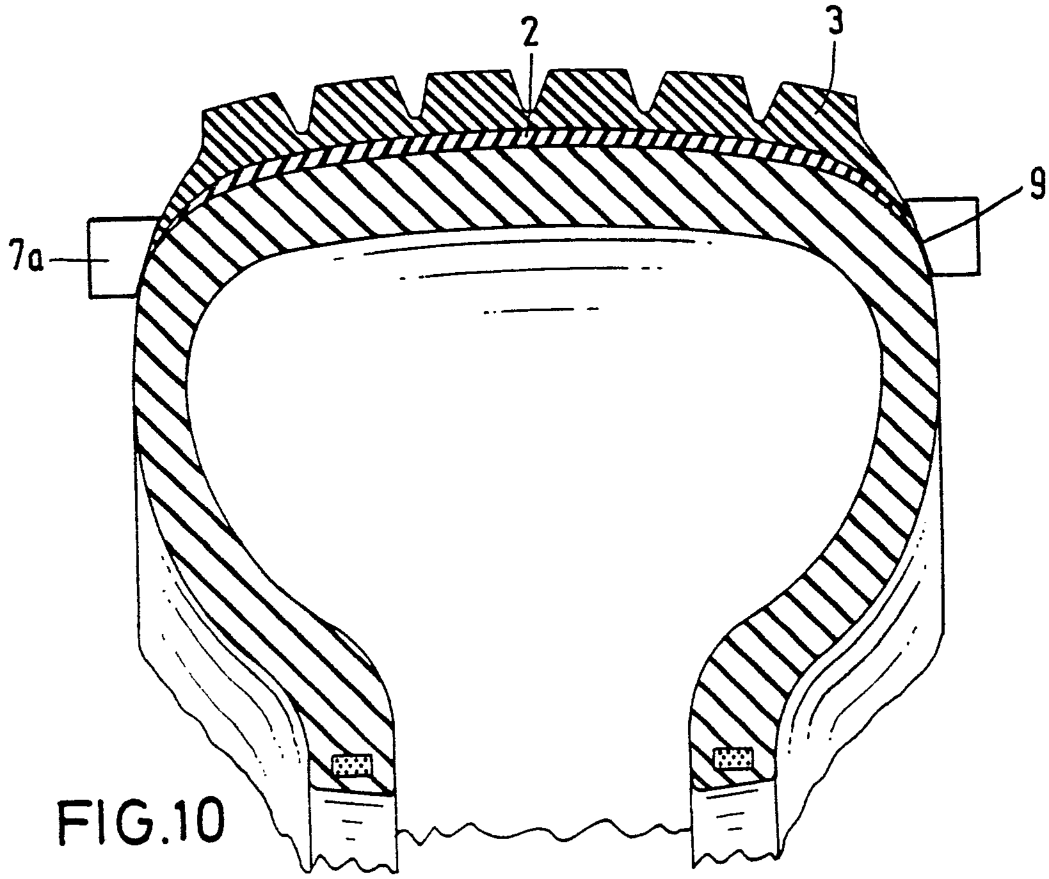


FIG.10

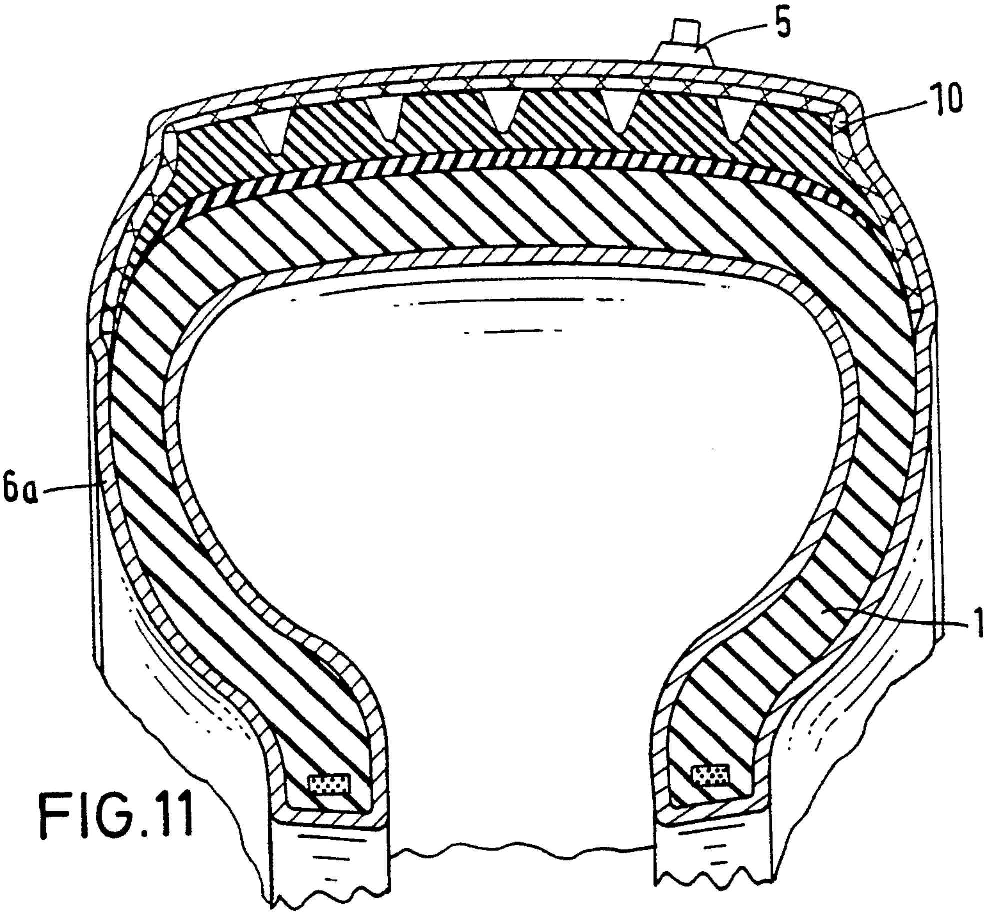


FIG.11

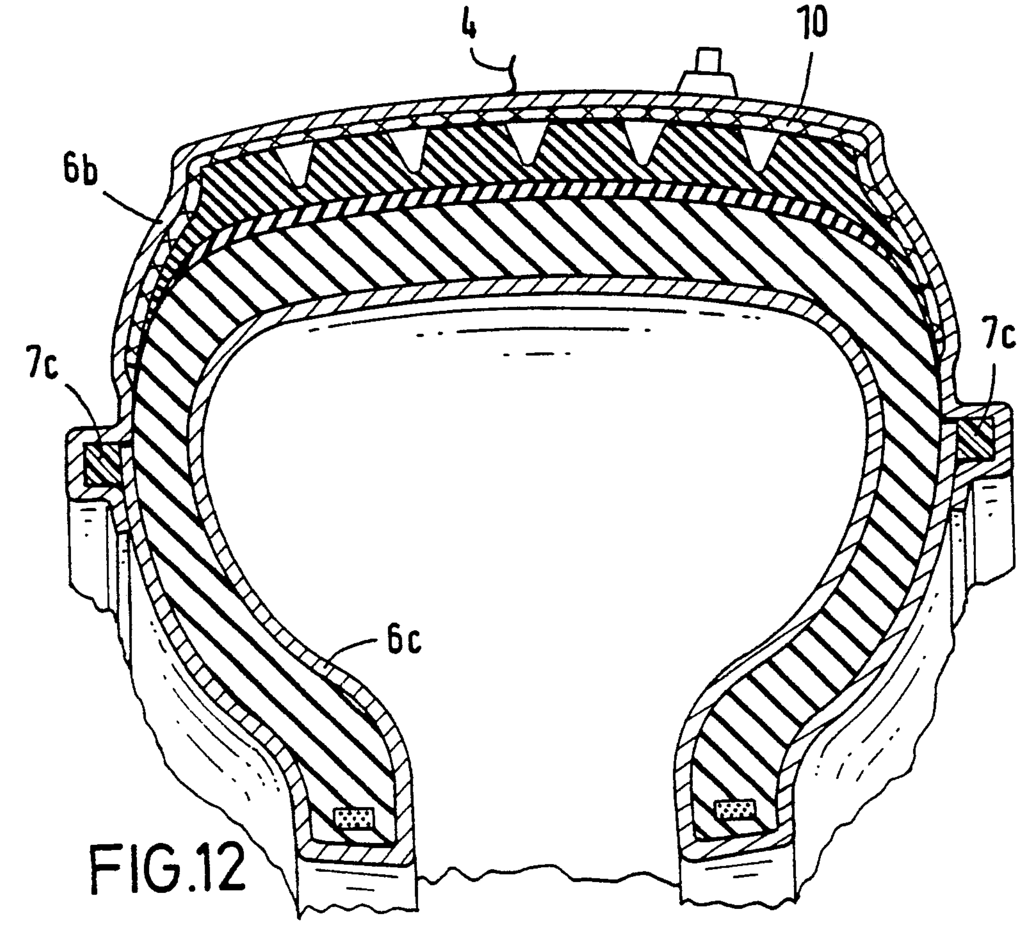


FIG.12

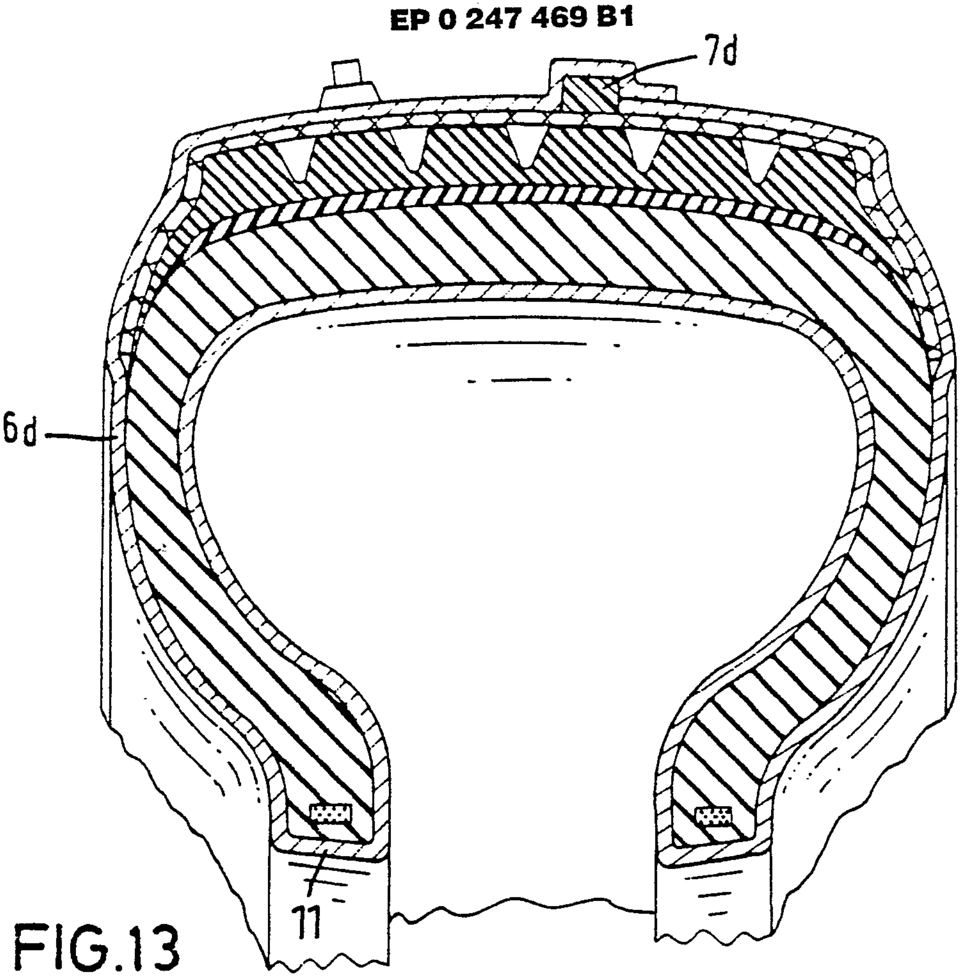


FIG.13

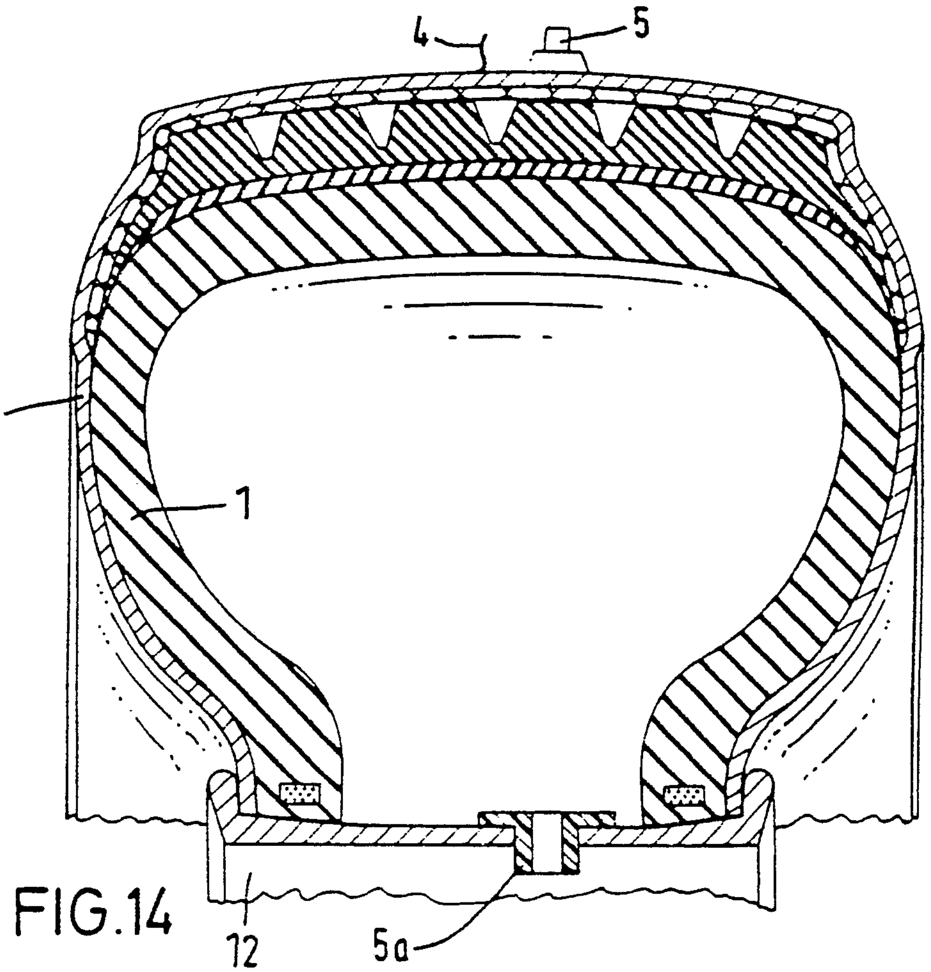


FIG.14